# EUROPÄISCHE PATENTSCHRIFT

(11) **EP 0 462 503 B1**
(45) Veröffentlichungstag und Bekanntmachung des Hinweises auf die Patenterteilung: **15.03.1995**
(21) Anmeldenummer: 91109650.1
(22) Anmeldetag: 12.06.1991
(51) Int. Cl.: H02J 7/14

(54) **Vorrichtung zur Regelung eines Generators**
Device for regulating a generator
Dispositif pour la régulation d'un générateur

(30) Priorität: 21.06.1990 DE 4019751; 26.01.1991 DE 4102335
(43) Veröffentlichungstag der Anmeldung: 27.12.1991
(73) Patentinhaber: ROBERT BOSCH GMBH, 70442 Stuttgart (DE)
(72) Erfinder: Kohl, Walter, W-7120 Bietigheim (DE); Meyer, Friedhelm, Dipl.-Ing., W-7132 Illingen (DE); Mittag, Rainer, Dipl.-Ing., W-7014 Kornwestheim (DE); Schramm, Guenter, W-7143 Vaihingen-Enzweihingen (DE)

(56) Entgegenhaltungen:
- EP-A- 0 178 395
- EP-A- 0 210 819
- EP-A- 0 246 976
- WO-A-90/07217
- DE-A- 3 309 447

## Beschreibung

### Stand der Technik

Die Erfindung geht aus von einer Vorrichtung zur Regelung eines Generators nach der Gattung des Hauptanspruches.

Zur Energieversorgung eines Kraftfahrzeuges werden heute überwiegend Drehstrom-Generatoren verwendet, die eine Wechselspannung erzeugen, welche in einer nachgeschalteten Gleichrichteranordnung gleichgerichtet wird und zur Versorgung der Verbraucher sowie zum Aufladen der Batterie verwendet wird. Da die Ausgangsspannung des Generators erheblich von der Generatordrehzahl abhängt, wird zur Erzielung einer gewünschten konstanten Ausgangsspannung ein Spannungsregler verwendet, der den Erregerstrom des Generators so beeinflußt, daß die Generatorausgangsspannung trotz erheblich veränderlicher Generatordrehzahl einen konstanten Wert von beispielsweise 14 Volt einhält.

Da die Zahl der elektrischen Verbraucher im Kraftfahrzeug ständig weiter anwächst, werden die Anforderungen an die Generatoren immer größer. Besonders im Winter, wenn zusätzlich zu den üblichen Verbrauchern noch Scheibenheizungen eingeschaltet werden oder wenn das Fahrzeug über längere Zeit lediglich im Stadtverkehr, also bei niedrigen Drehzahlen betrieben wird, treten Probleme bei der Energieversorgung auf. Es wird daher versucht, die Stromabgabe von Drehstrom-Generatoren so zu steigern, daß die Ausgangsleistung der Generatoren bei gleichbleibender Spannung gesteigert wird.

Eine Möglichkeit, die Generatorleistung zu erhöhen, ist aus der DE-OS 31 42 878 bekannt. Bei diesem Vorschlag wird die Erregerwicklung mit einer gegenüber der Batteriespannung erhöhten Spannung versorgt. Dadurch wird die Stärke des Erregerstromes erhöht, wodurch ein wesentlich stärkeres Magnetfeld erzeugt wird, das bei sonst unveränderten Generatorabmessungen zu einer Steigerung der Generatorausgangsleistung führt. Der maximale Erregerstrom bzw. die maximale Durchflutung wird durch die thermischen Grenzwerte der Gleichrichterdioden bzw. des Ständers im Generator bestimmt. Wird, wie in der DE-OS 31 42 878 beschrieben, die Erregerwicklung mit einer gegenüber der Bordnetzspannung erhöhten Spannung betrieben, besteht die Gefahr, daß bei ungünstigen Betriebsbedingungen die thermisch zulässigen Grenzwerte überschritten werden.

Um dieses Problem zu lösen, wird in der nicht vorveröffentlichten DE-P 38 43 163, die der unter Artikel 54(3) des EPÜ fallenden EP-A-0407485 entspricht, vorgeschlagen, bei einem Fahrzeug-Drehstrom-Generator zur optimalen Energieversorgung des Bordnetzes, den Erregerstrom unter bestimmten Bedingungen gegenüber dem Nennerregerstrom zu erhöhen. Durch eine Temperaturmessung im Regler und Anordnung des Reglers auf einem Generatorbauteil, das besonders warm wird, wird rechtzeitig erkannt, wann der thermische Grenzwert erreicht wird. Nach diesem Erkennen wird der Erregerstrom soweit reduziert, daß der thermische Grenzwert nicht überschritten wird. In der DE-P 38 43 163 wird jedoch nicht angegeben, wie die Erhöhung des Erregerstromes über den Nennerregerstrom bewerkstelligt werden soll.

Aus der DE-OS 33 09 447 ist eine Steuereinrichtung zur Steuerung des Ausgangssignales eines Generators bekannt, bei der zur Steigerung der thermischen Sicherheit eines herkömmlichen Generatorsystems zusätzlich eine Temperaturmessung erfolgt und bei Überschreiten einer Grenztemperatur, insbesonders bei hoher Umgebungstemperatur eine Reduzierung der Generatorausgangsleistung eingeleitet wird. Dieses bekannte System zeigt jedoch nicht auf, den Generator in einem übererregten Betrieb zu betreiben und damit bei tiefen Temperaturen eine zusätzliche Leistungsabgabe zu erzielen.

Aus der EP-0 178 395 ist ein Spannungsregler für einen Generator bekannt, bei dem ebenfalls Temperaturmessungen stattfinden. Diese finden in der Umgebung des Spannungsreglers statt und führen dazu, daß bei Erreichen einer Grenztemperatur das Erregerstrom-Taktverhältnis abgesenkt wird, so daß Überhitzungen vermieden werden. Die Betreibung des Generators in übererregtem Zustand wird bei diesem bekannten System nicht vorgeschlagen.

### Vorteile der Erfindung

Die erfindungsgemäße Vorrichtung zur Regelung eines Generators hat gegenüber dem Bekannten den Vorteil, daß der Generator bei großer Leistungserfordernis in einem übererregten Bereich, bzw. in einem thermisch nicht unkritischen Zustand betrieben werden kann, wobei durch Temperaturmessung im Spannungsregler selbst sowie durch gegebenenfalls einleitbare Schutzmaßnahmen verhindert wird, daß der Generator, die Gleichrichterdioden oder der Spannungsregler infolge thermischer Überhitzung zerstört wird.

Durch die erfindungsgemäßen Maßnahmen der Verringerung des Widerstandes der Erregerwicklung oder durch Verwendung einer gegenüber der Bordnetzspannung erhöhten Spannung, ist es problemlos möglich, den Generator zeitweilig im übererregten Bereich zu betreiben.

In einer weiteren Ausgestaltung ist es möglich, die erfindungsgemäße Vorrichtung generell so auszulegen, daß sie auch bei Betrieb mit Nennerregerstrom bei einem Zusammentreffen ungünstiger Umstände, also beispielsweise besonders hohe Aussentemperaturen in Verbindung mit relativ geringer Generatordrehzahl und damit geringer Kühlung unerlabt heiß würde und, damit in diesem Fall eine thermische Überlastung vermieden wird, mit einer Sicherheitseinrichtung zu versehen, die bei erkannter Übertemperatur oder kurz vor erreichen von Übertemperatur eine Verringerung des Erregerstromes einleitet.

Die erforderliche Temperaturermittlung kann dabei durch Temperaturmessung im Spannungsregler und durch Berechnung der Temperatur einzelner Elemente der Vorrichtung erfolgen, wobei es besonders vorteilhaft ist, zur Berechnung generator-, regler- oder fahrzeugtypische Parameter oder Kennfelder zu verwenden.

Diese Vorgehensweise entspricht der aus der Regelungstechnik allgemein bekannten Beobachter-Funktion, bei der ein Beobachter eine einer Messung gut zugängige Meßgröße ermittelt, so daß aus der ermittelten Meßgröße eine andere, der Messung schlechter zugängige Meßgröße bestimmt werden kann.

Ist die vom Beobachter ermittelte Meßgröße die Temperatur am Spannungsregler, lassen sich die Temperaturen an anderer Stelle des Bordnetzes ebenfalls bestimmen, so daß bei Überschreiten einer oder mehrerer vorgebbarer Grenztemperaturen eine Reduzierung des Erregerstromes vorgenommen wird.

Durch die in den Unteransprüchen aufgeführten Maßnahmen sind vorteilhafte Weiterbildungen und Verbesserungen der im Hauptanspruch angegebenen Vorrichtung zur Spannungsregelung möglich.

### Zeichnung

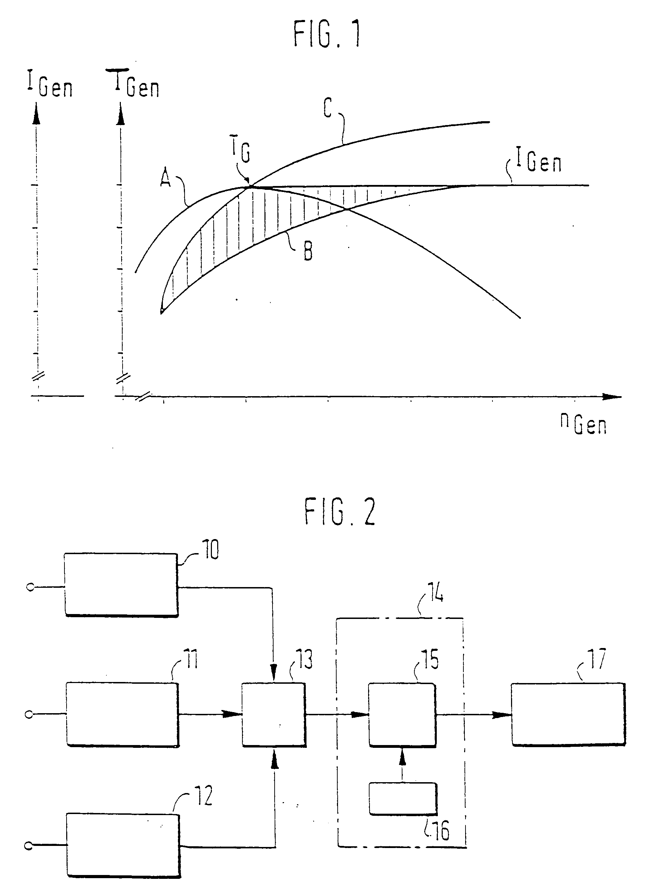

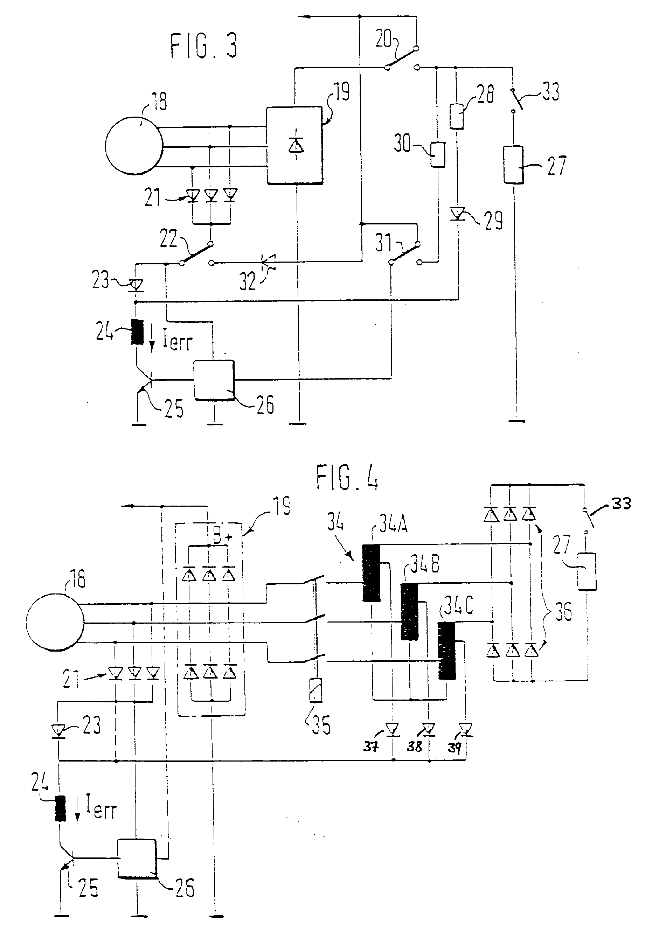

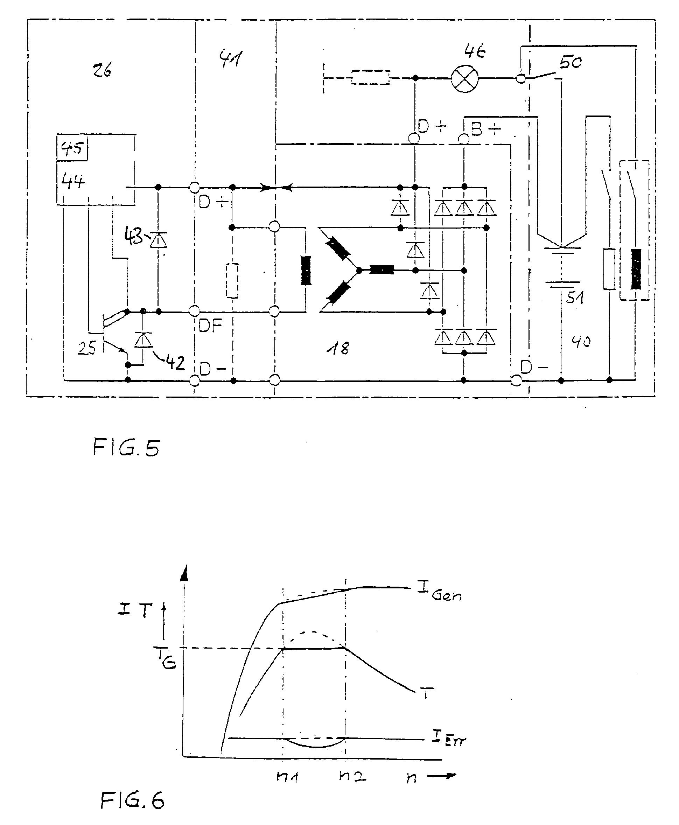

In Figur 1 ist der Zusammenhang zwischen der Generatortemperatur und der Generatordrehzahl bzw. des Generatorstromes und der Drehzahl für zwei verschiedene Erregerwicklungen dargestellt. Figur 2 zeigt eine erfindungsgemäße Einrichtung, mit der sichergestellt werden kann, daß der Erregerstrom bei Erreichen des thermischen Grenzwertes reduziert wird. In Figur 3 und 4 sind zwei Schaltungsbeispiele aufgezeigt, die eine Versorgung der Erregerwicklung mit einer gegenüber der Bordnetzspannung erhöhten Spannung gewährleisten, in Figur 5 ist das elektrische Schaltbild einer Generator-/Spannungsregleranordnung dargestellt, bei der ein Betrieb mit erhöhtem Erregerstrom nicht vorgesehen ist, dafür ist jedoch eine Dimensionierung derart vorgesehen, daß unter ungünstigen Umständen eine zu hohe Temperatur auftreten könnte und Figur 6 zeigt den Zusammenhang zwischen Generatortemperatur, Erregerstrom und Drehzahl bei einem System nach Figur 5.

In Figur 1 zeigt Kurve A den Verlauf der Generatortemperatur T_{Gen.} über der Generatordrehzahl n_{Gen.} Die maximal auftretende Temperatur ist dabei abhängig von der Drehzahl, der Generatorbelastung und der Umgebungstemperatur. Die höchste Temperatur tritt üblicherweise bei relativ geringen Drehzahlen des Generators auf, da bei höheren Drehzahlen die Kühlleistung zunimmt.

Üblicherweise wird der Generator so ausgelegt, daß auch im ungünstigsten Fall eine maximal erlaubte Temperatur nicht überschritten wird. Es ist daher erforderlich, daß die Erregerwicklung einen so hohen Widerstand aufweist, daß bei der anliegenden Bordnetzspannung ein Erregerstrom fließt, der gewährleistet, daß der thermische Grenzwert des Generators nicht überschritten wird, üblich sind etwa 2,6 Ω.

Kurve B zeigt den Verlauf des Generatorstroms I_{Gen} über der Generatordrehzahl n_{Gen} für eine Erregerwicklung, deren Widerstand so angepaßt wurde, daß die maximal erlaubte Generatortemperatur nicht überschritten wird.

Kurve C stellt den Verlauf des Generatorstroms über der Generatordrehzahl für eine Erregerwicklung, deren Widerstand kleiner als bei B ist, und z. B. 2,0 Ω beträgt dar. Beim Einsatz einer Erregerwicklung mit einem derartigen Widerstand würde die Generatortemperatur unter ungünstigen Umständen einen zu hohen Wert annehmen, es sind daher geeignete Maßnahmen vorzusehen, die dies verhindern.

Wird eine Erregerwicklung mit verkleinertem Widerstand eingesetzt, muß der Strom durch diese Erregerwicklung dann begrenzt werden, wenn die Gefahr besteht, daß der thermische Grenzwert des Generators überschritten wird, also wenn die gemessene Temperatur den zulässigen Grenzwert erreicht. Besonders bei tiefen Außentemperaturen kann bis zum Erreichen der Grenztemperatur T_{G} ein gesteigerter Generatorstrom I_{Gen}, bzw. Leistungsabgabe erhalten werden. Der zusätzliche Generatorstrom wird durch den schraffierten Bereich dargestellt.

In Figur 2 ist eine Einrichtung dargestellt, mit der eine solche Beeinflussung des Erregerstroms durchgeführt werden kann. Mit 10 ist ein Sensor zur Messung der Regler- bzw. Generatortemperatur bezeichnet. Dabei wird mit dem Sensor 10 vorzugsweise die Temperatur des Reglers gemessen, die Temperaturerfassung kann im Regler selbst erfolgen, da sich im stabilisierten Zustand die Reglertemperatur durch Eigenerwärmung nicht ändert. Die Reglertemperatur ist im übrigen ein Maß für die Außentemperatur. 11 stellt eine Einrichtung zur Messung der Generatordrehzahl dar, und mit 12 ist eine Einrichtung zu Bestimmung des Tastverhältnisses bezeichnet. Mit Tastverhältnis ist dabei das Verhältnis Ein zu Aus der Reglerendstufe gemeint. Gemessen wird dieses Tastverhältnis an der Reglerklemme DF.

13 stellt eine Summationseinrichtung dar, in der die vom Temperatursensor 10, von der Einrichtung zur Drehzahlerfassung 11 und von der Einrichtung zur Bestimmung des Tastverhältnisses 12 gelieferten Signale in geeigneter Weise überlagert werden. Dabei läßt sich aus der Generatordrehzahl und dem Tastverhältnis der Reglerendstufe über geeignete Kennfelder der Generatorstrom ermitteln. Das so erhaltene Summensignal wird einer Pulsdauermodulationsstufe 14 zugeführt, die aus einem Komparator 15 und einem Oszillator 16 besteht. In der Pulsdauermodulationsstufe 14 wird ein moduliertes Signal erzeugt, das der Reglerendstufe 17 zugeführt wird und das Tastverhältnis der Reglerendstufe und somit den Erregerstrom I_{Err} beeinflußt.

Wesentlich ist, daß mit der in Figur 2 dargestellten Einrichtung eine Beeinflussung des Reglers nur oberhalb einer vorgebbaren kritischen Temperatur erfolgt, da nur dann das dem Komparator 15 zugeführte Summensignal einen vorbestimmten Schwellwert überschreitet. Wird die kritische Temperatur erreicht, wird über das in der Pulsdauermodulationsstufe 14 erzeugte modulierte Signal die Reglerendstufe so beeinflußt, daß ein weiterer Temperaturanstieg infolge eines erhöhten Erregerstromes vermieden wird, d.h. der Erregerstrom wird durch häufigeres Sperren der Reglerendstufe reduziert.

Bei dem in Figur 3 dargestellten Ausführungsbeispiel wird die Erhöhung des Erregerstromes dadurch erreicht, daß zumindest für eine gewisse Zeit eine höhere Spannung an die Erregerwicklungen angelegt wird. Diese höhere Spannung wird dadurch erzeugt, daß der Generator, beispielsweise beim kurzfristigen Betrieb einer elektrischen Heizscheibe, mit freilaufender Spannung betrieben wird. Die beim Betrieb mit freilaufender Spannung an der Generatorklemme B+ anstehende höhere Spannung wird dabei über eine geeignete Schaltungsanordnung direkt der Erregerwicklung zugeführt.

Die Schaltungsanordnung nach Figur 3 zeigt dabei im einzelnen: Einen Generator 18, der über die Gleichrichterbrücke 19 einerseits mit Masse und andererseits über die Klemme B+ mit einem herkömmlichen Bordnetz mit nicht dargestellten Verbrauchern und einer ebenfalls nicht dargestellten Batterie verbunden ist. Dabei erfolgt die Verbindung zwischen B+ und den Verbrauchern über eine Schalter 20.

Der Generator 18 ist weiterhin über die Erregergleichrichter 21 und einen weiteren Schalter 22 sowie eine Diode 23 mit der Erregerwicklung 24 verbunden. Die Erregerwicklung 24 ist ihrerseits über den Endstufentransistor 25 des Spannungsreglers 26 mit Masse verbunden. Ein weiterer Anschluß des Spannungsreglers 26 ist über Schalter 22 mit den Erregerstromgleichrichtern 21 verbunden.

Mit 27 ist eine elektrische Heizscheibe bezeichnet, diese kann über den Schalter 20 an die Klemme B+ gelegt werden. Ein weiterer Strompfad führt über den Widerstand 28 und die Diode 29 zur Erregerwicklung 24. Dieser Strompfad kann ebenfalls über den Schalter 20 und die Klemme B+ gelegt werden. Ein weiterer Pfad führt schließlich über den Widerstand 30 und einen weiteren Schalter 31 zum Regler 26, derselbe Anschluß des Reglers 26 kann in der anderen Schalterstellung des Schalters 31 mit dem Bordnetz und über eine weitere Diode 32 mit dem Schalter 22 verbunden werden, wobei die Anode der Diode 32 direkt mit dem Bordnetz verbunden ist.

Im Normalbetrieb, wenn an der Erregerwicklung die übliche Bordnetzspanung von 12 V liegt, ist die Schalterstellung so wie in Figur 3 bezeichnet. Dabei wird über den Schalter 20 das Bordnetz versorgt, über Schalter 22 wird der Erregerstrom I_{Err} der Erregerwicklung 24 zugeführt, und über Schalter 31 ist der Spannungsregler 26 mit dem Bordnetz verbunden. Wird dagegen umgeschaltet auf gesteigerte Leistung, ist die Klemme B+ über den Schalter 20 mit den Widerständen 28 und 30 sowie mit der Heizscheibe 27 verbunden. Über den umgeschalteten Schalter 31 ist der Regler 26 mit B+ verbunden, über den Widerstand 28 und die Diode 29 liegt die Erregerwicklung 24 ebenfalls an B+, die Gleichrichterbrücke 21 wird durch den Schalter 22 von der Erregerwicklung 24 abgetrennt.

In diesem Schaltzustand wird der Generator 18 mit freilaufender Spannung betrieben, an der Klemme B+ entsteht daher eine höhere Spannung als die Bordnetzspannung, diese höhere Spannung wird über Widerstand 28 und Diode 29 an die Erreger 24 angelegt. Da im genannten Betriebszustand der Generator zu heiß werden könnte, muß dafür gesorgt werden, daß dieser Betriebszustand entweder nur für eine relativ kurze Zeitdauer von einigen Minuten bestehenbleiben kann oder daß eine Schaltungsanordnung ähnlich der aus Figur 2 bekannten Schaltungsanordnung eine Begrenzung des Erregerstromes vornimmt, wenn die Temperatur des Reglers beziehungsweise des Generators zu hoch wird. Ein Zeitschaltglied bzw. die Schaltungsanordnung zur Begrenzung des Erregerstromes ist dabei vorzugsweise im Spannungsregler 26 enthalten.

Üblicherweise besteht der gesteigerte Leistungsbedarf während der Heizphase in Heizscheibe 27. Über einen weiteren Schalter 33 kann die Heizscheibe 27 jedoch abgetrennt werden, so daß dann ein leistungsgesteigerter Betrieb mit frei laufender Spannung möglich ist, ohne daß die Heizscheibe 27 eingeschaltet wird.

Die Diode 32 kann an dieser Stelle entfallen, wenn das gesamte Versorgungsteil für höhere Spannungen, beispielsweise 20 Volt, ausgelegt ist. Sie kann dann außerhalb des Generators angebracht werden.

In Figur 4 ist ein Ausführungsbeispiel dargestellt, bei dem der erhöhte Erregerstrom ebenfalls durch Anlegung einer höheren Spannung als die Bordnetzspannung an die Erregerwicklung 24 erreicht wird. In diesem Fall wird die höhere Spannung mit Hilfe eines Transformators 34 erhalten. Ein solcher Aufwand lohnt sich haupsächlich dann, wenn für eine elektrische Heizscheibe ohnehin eine gegenüber der Bordnetzspannung erhöhte Spannung erforderlich ist.

Im einzelnen zeigt Figur 4 wiederum einen Generator 18, der über eine Gleichrichterbrücke 19 mit der Klemme B+ mit dem Bordnetz verbunden ist, wobei die andere Seite der Gleichrichterbrücke 19 mit Masse verbunden ist. Über Erregerdioden 21 und eine Diode 23 ist die Erregerwicklung 24 mit der Reglerendstufe 25 verbunden. Die Reglerendstufe 25 ist wiederum mit Masse und mit dem Regler 26 verbunden, wobei der Regler 26 zusätzlich an den Erregerdioden 21 liegt.

Über ein Relais 35 sind die Wicklungen des Transformators 34 an den Generator 18 anlegbar. Diese Wicklungen 34A, 34B, 34C sind über ein weiteres Gleichrichtersystem 36 mit der Heizscheibe 27 verbunden. Weitere Abgriffe der Transformatorwicklungen 34A, 34B und 34C führen über die Dioden 37, 38 und 39 direkt auf die Erregerwicklung 24. Im Normalbetrieb sind die Kontakte des Relais 35 geöffnet und die Erregerwicklung 24 wird mit der vom Generator gelieferten üblichen Spannung betrieben.

Wird, beispielsweise beim Betrieb der Heizscheibe 27, eine gesteigerte Leistung des Generators erforderlich, wird bei angezogenem Relais 35 im Transformator 34, der auch durch einen passenden Spannungswandler ersetzt werden könnte, eine höhere Spannung erzeugt, die die Heizscheibe mit Energie versorgt. Gleichzeitig wird über die Dioden 37, 38 und 39 eine gegenüber der Bordnetzspannung erhöhte Spannung an die Erregerwicklung 24 angelegt, so daß der Strom durch die Erregerwicklung 24 einen gegenüber dem Nennerregerstrom erhöhten Wert annimmt. Da in diesem Fall die Gefahr der thermischen Überlastung besteht, muß dafür gesorgt werden, daß das Relais nur für eine vorbestimmbare Zeit von beispielsweise einigen Minuten im angezogenen Zustand verbleiben kann, es kann jedoch auch mit einer Anordnung nach Figur 2, die beispielsweise im Spannungsregler 26 enthalten ist, dafür gesorgt werden, daß der Erregerstrom I_{Err} bei Erreichen einer kritischen Temperatur trotz erhöhter Spannung über eine Veränderung des Tastverhältnisses des Spannungsreglers zurückgenommen wird. Dadurch wird eine thermische Überlastung des Reglers beziehungsweise Generators vermieden.

Das Relais 35 kann selbst eine Zeitschaltung enthalten, die ein Öffnen der Kontakte nach einer vorbestimmbaren Zeit auslöst, es kann aber auch vom Spannungsregler 26 über eine in Figur 4 gestrichelt eingezeichnete Verbindung angesteuert werden, wobei ein Öffnen dann erzwungen wird, wenn die im Regler 26 gemessene Temperatur einen Grenzwert übersteigt.

Kann die Heizscheibe 27 über einen weiteren Schalter 33 vom Transformator 34 abgekoppelt werden, ist eine Leistungssteigerung des Generators auch ohne gleichzeitigen Heizbetrieb möglich.

Wird ein Spannungsregler 26 mit Batteriesensing eingesetzt, wird also die Batteriespannung dem Regler 26 über die in Figur 4 gestrichelt dargestellte Leitung zugeführt, kann die Diode 23 entfallen, die Erregerwicklung 24 wird dann über die ebenfalls gestrichelt dargestellte Verbindung mit den Erregerdioden 21 verbunden.

Eine Generator-/ Spannungsregleranordnung, bei der eine Erhöhung des Erregerstromes I_{Err} über den Nennerregerstrom nicht vorgesehen ist und die dennoch gegenüber herkömmlichen Systemen verbessert ist, kann dadurch erhalten werden, daß zwar eine herkömmliche Anordnung verwendet wird, die Dimensionierung der einzelnen Bauelemente jedoch so gewählt wird, daß unter ungünstigen Umständen eine Überhitzung auftreten könnte.

Um dies zu verhindern wird der Erregerstrom I_{Err} abgesenkt, wenn der Spannungsregler erkennt, daß die Temperatur an einer Stelle des Systems auf einen unzuläßigen Wert steigt.

In Figur 5 ist eine solche Generator-/ Spannungsregleranordnung dargestellt, dabei bezeichnet 18 einen Drehstrom-Generator, der ein Bordnetz 40 mit Energie versorgt. Die Regelung der Generatorausgangsspannung erfolgt mit einem Spannungsregler 26, der über den Bürstenhalter 41 mit dem Drehstrom-Generator 18 verbunden ist. Der Generator 18, mit den Klemmen D+, B+, DF und D-, das Bordnetz 40, sowie der Bürstenhalter 41 sind in üblicher Weise aufgebaut und sollen an dieser Stelle nicht näher beschrieben werden, lediglich die Ladekontrollampe 46, der Anlasser 50 und die Batterie 51, die zwischen dem Generator und Masse liegen, sollen noch erwähnt werden.

Der Spannungsregler 26 mit den Ausgangsklemmen D+, DF und D- enthält in üblicher Weise ein Schaltelement, beispielsweise einen Schalttransistor 25 mit einer antiparallel gaschalteten Diode 42, die zwischen die Reglerklemmen DF und D- geschaltet ist sowie eine Freilaufdiode 43, die zwischen DF und D+ liegt.

Weiterhin enthält der Spannungsregler eine nicht näher dargestellte Schaltungsanordnung 44, die zwischen die Klemmen D+, DF und D- sowie an die Basis des Transistors 25 sowie seinen Kollektor angeschlossen ist.

Die Schaltungsanordnung 44 enthält einen Temperaturmeßkreis 45, der die Temperatur des Spannungsreglers 26 mißt, die Schaltungsanordnung 44 umfaßt außerdem noch weitere Zusatzeinrichtungen, beispielsweise zur Fehleranzeige, diese kann gegebenenfalls auch über die Ladekontrollampe 46 erfolgen.

Falls die Batterietemperatur gemessen wird, kann diese Information ebenfalls der Schaltungsanordnung 44 zugeführt werden, ebenfalls die Generatordrehzahl sowie beliebige andere Meßdaten.

Die Schaltungsanordnung 44 des Spannungsreglers 26 kann auch als Mikroprozessor oder Mikrcomputer ausgeführt sein, wobei dann in diesem Mikroprozessor die erforderlichen Berechnungen sowie Soll-/Ist-Wert Vergleiche ablaufen, unter Berücksichtigung von gemessenen Größen wie beispielsweise Reglertemperatur sowie unter Berücksichtigung von im Mikroprozessor abgespeicherten Kennwerten.

Als Kennwerte sind abgespeichert: Kennwerte des Generators, des Spannungsreglers, des Fahrzeugs sowie einbauspezifische Kennwerte. Weiterhin sind Grenztemperaturen T_{G}, bis zu denen die Erhitzung maximal zuläßig ist abgespeichert. Diese Grenztemperaturen können für das Gesamtsystem einheitlich festgelegt sein oder es kann festgelegt werden, daß unterschiedliche Stellen bis zu unterschiedlichen Grenztemperaturen erwärmt werden dürfen.

Die Funktionsweise der Generator-/ Spannungsregleranordnung nach Fig. 5 soll anhand Fig. 6 erläutert werden.

In Fig 6 ist der Generatorstrom I_{Gen}, der Erregerstrom I_{Err} sowie die Temperatur T über der Generatordrehzahl n aufgetragen. In einem Drehzahlbereich zwischen n₁ und n₂ kann bei hoher Umgebungstemperatur die Generatortemperatur aber auch die Temperatur an einer anderen Stelle der Generator-/ Regleranordnung einen als zuläßig erachteten Wert von T_{G} überschreiten, wenn keine geeigneten Maßnahmen ergriffen werden. Der gestrichelte Teil von Fig. 6 zeigt den zugehörigen, unerwünschten Verlauf.

In der Schaltungsanordnung 44 bzw. entsprechend im Mikroprozessor wird laufend aus der vorliegenden Reglertemperatur, den abgespeicherten Kennwerten sowie gegebenenfalls zusätzlich gemessenen Größen, beispielsweise Generatordrehzahl n, berechnet, wie hoch die gerade herrschende Temperatur an vorgebbaren Stellen der Generator-/ Spannungsregleranordnung ist.

Überschreitet eine solche, berechnete Temperatur einen oder unterschiedliche vorgegebene Grenztemperaturen, wird der Erregerstrom durch Ansteuerung des Schalttransistors 25 verringert, wodurch die Temperatur den oder die gewählten Grenzwerte nicht überschreitet.

Sinkt die Temperatur wieder weiter ab, weil sich entweder die Aussentemperatur verringert hat oder die Generatordrehzahl gesteigert wurde, erhöht der Spannungsregler den Erregerstrom wieder auf seinen normalen Wert.

Die beschriebene Messung der Temperaturen am Spannungsregler, die ohne große Schwierigkeiten bzw. ohne großen Aufwand möglich ist und die aus dieser gemessenen Temperatur berechneten Temperaturen an anderer Stelle des Systems entsprechen einer sogenannten Beobachter-Funktion, die eine in der Regelungstechnik bekannte Maßnahme darstellen.

Die durchgezogenen Linien der Fig. 6 zeigen die Strom- bzw. Temperaturverläufe bei einer erfindungsgemäßen Erregerstromabsenkung bei zu hohen Temperaturen.

Solange der Erregerstrom abgesenkt ist erfolgt eine Anzeige, beispielsweise über die Ladekontrollampe, die Auslösung der Anzeige erfolgt mittels des Spannungsreglers 26 bzw. des Mikroprozessors 44.

Bei der Generator-/ Spannungsregleranordnung nach Fig. 5 sind die Generatorbauteile so ausgelegt, daß im ungünstigsten Fall zu hohe Temperaturen auftreten könnten, dabei kann beispielsweise der Querschnitt der Wicklungen kleiner als üblich gewählt sein oder die Dimensionierung des Kühllüfters verringert sein oder die Ausgestaltung der Kühlelemente vereinfacht sein, wodurch insgesamt Material- und Gewichtseinsparungen möglich sind.

Die Einrichtungen der Figuren 2-5 sind selbstverständlich miteinander kombinierbar, so daß auch für die Einrichtungen nach Fig. 3, 4 eine Temperaturberechnung mittels eines Mikroprozessors erfolgen kann, unter Berücksichtigung von abgespeicherten Kennwerten oder Meßwerten. Ebenso kann auch bei diesen Einrichtungen eine Anzeige erfolgen, wenn der Erregerstrom abgesenkt wird.

## Patentansprüche

1. Vorrichtung zur Regelung eines Generators (18) mit einer Erregerwicklung (24) und einem Spannungsregler (26), der durch Beeinflussung des Erregerstroms des Generators dessen Ausgangsspannung regelt und Mittel zur Temperaturerfassung (10) aufweist, wobei der Generator so ausgelegt ist, daß bei starker Belastung und/oder hohen Außentemperaturen insbesonders bei geringer Generatordrehzahl eine erlaubte Grenztemperatur (T_{G}) am Generator oder der Vorrichtung selbst auftritt, zur Erhöhung der Leistung des Generators (18) eine gegenüber der Ausgangsspannung des Generators (18) erhöhte Spannung an die Erregerwicklung (24) zuführbar ist und Mittel (25) zur Beeinflussung des Erregerstromes (I_{Err}) vorgesehen sind, die vor oder bei Erreichen der Grenztemperatur (T_{G}) an einer vorgebbaren Stelle den Erregerstrom (I_{Err}) absenken.

2. Vorrichtung zur Regelung eines Generators (18) mit einer Erregerwicklung (24) und einem Spannungsregler (26, 17), der durch Beeinflussung des Erregerstroms des Generators dessen Ausgangsspannung regelt und Mittel zur Temperaturerfassung (10) aufweist, wobei der Wert des Widerstandes der Erregerwicklung (24) kleiner ist, als ein Wert, der auch im ungünstigsten Fall zu keiner thermischen Überlastung des Generators (18) oder des Reglers (26, 17) führt und der Erregerstrom (I_{Err}) zeitweilig gegenüber dem Nennerregerstrom erhöht ist und weitere Mittel (25) vorgesehen sind, die bei Erreichen einer Grenztemperatur (T_{G}) an einer vorgebbaren Stelle den Erregerstrom (I_{Err}) absenken.

3. Vorrichtung nach Anspruch 2, dadurch gekennzeichnet, daß zu Erhöhung der Leistung des Generators (18) eine gegenüber der Ausgangsspannung des Generators (18) erhöhte Spannung erzeugt wird, die der Erregerwicklung (24) zugeführt werden kann.

4. Vorrichtung nach Anspruch 1, 2, oder 3, dadurch gekennzeichnet, daß die Mittel, die den Erregerstrom absenken, eine Pulsdauermodulationsstufe (14) umfassen, die einen Komparator (15) und einen Oszillator (16) aufweist und das Tastverhältnis des Reglers (17) beeinflußt.

5. Vorrichtung nach Anspruch 4, dadurch gekennzeichnet, daß aus der Temperatur des Reglers, der Drehzahl des Generators und dem Tastverhältnis des Reglers ein Summensignal gebildet wird, das der Pulsdauermodulationsstufe (14) als Eingangssignal zugeführt wird.

6. Vorrichtung nach Anspruch 5, dadurch gekennzeichnet, daß die Pulsdauermodulationsstufe (14) nur dann ein Ausgangssignal liefert, wenn das Summensignal einen Schwellwert des Komparators 15 übersteigt.

7. Vorrichtung nach Anspruch 2 oder 3, dadurch gekennzeichnet, daß zur Erzeugung gegenüber der Bordnetzspannung erhöhten Spannung der Generator (16) mit freilaufender Spannung betrieben wird.

8. Vorrichtung nach Anspruch 2 oder 3, dadurch gekennzeichnet, daß die gegenüber der Bordnetzspannung erhöhte Spannung mit Hilfe eines Transformators (34) oder eines geeigneten Spannungswandlers erzeugt wird.

9. Vorrichtung nach einem der vorhergehenden Ansprüche, dadurch gekennzeichnet, daß die erhöhte Spannung nur während einer vorbestimmbaren Zeitdauer an die Erregerwicklung (24) angelegt werden kann.

10. Vorrichtung nach einem der vorherigen Ansprüche, dadurch gekennzeichnet, daß eine Anzeige erfolgt, wenn die Grenztemperatur erreicht wird und/oder der Erregerstrom I_{Err} abgesenkt wird.

11. Vorrichtung nach einem der vorhergehenden Ansprüche, dadurch gekennzeichnet, daß die Mittel zur Temperaturerfassung eine Recheneinrichtung, vorzugsweise einen Mikroprozessor umfassen, in dem die benötigten Kennwerte abgespeichert sind, dem die erforderlichen Meßgrößen zugeführt werden und in dem die erforderlichen Berechnugen ablaufen

12. Vorrichtung nach einem der vorhergehenden Ansprüche, dadurch gekennzeichnet, daß die Mittel zur Beeinflussung des Erregerstromes I_{Err} Kennwerte des Generators, und/oder Kennwerte des Spannungsreglers und/oder des Fahrzeugs und/oder einbauspezifische, abgespeicherte Kennwerte zur Berechnung der Temperatur an vorgebbaren Stellen der Vorrichtung verwertet.

13. Vorrichtung nach Anspruch 12, dadurch gekennzeichnet, daß im Spannungsregler laufend ermittelte Signale, vorzugsweise Temperatur des Spannungsreglers und Drehzahl des Generators bei der Berechnung der Temperatur an vorgebbaren Stellen mitberücksichtigt wird.

14. Vorrichtung nach einem der vorhergehenden Ansprüche, dadurch gekennzeichnet, daß die Grenztemperatur T_{G} die Temperatur ist, bei der noch keine Fehlfunktionen zu erwarten sind und für unterschiedlichen Stellen der Vorrichtung verschiedene Grenztemperaturen festgelegt werden.

15. Vorrichtung nach einem der vorhergehenden Ansprüche 11 bis 14, dadurch gekennzeichnet, daß die Mittel zur Temperaturerfassung die Temperatur des Spannungsreglers messen und in der Recheneinrichtung daraus die Temperatur an anderer, auswählbarer Stelle des Systems errechnet wird.

16. Vorrichtung nach Anspruch 15, dadurch gekennzeichnet, daß ein Beobachter zur Temperaturerfassung verwendet wird.

## Claims

1. Device for regulating a generator (18) having a field winding (24) and a voltage regulator (26) which, by influencing the field current of the generator, regulates the output voltage of the latter and has means (10) for temperature detection, the generator being designed such that, with heavy loading and/or high external temperature, especially at a low generator rotational speed, an allowed limit temperature (T_{G}) occurs on the generator or on the device itself, a voltage which is increased with respect to the output voltage of the generator (18) can be supplied to the field winding (24) in order to increase the power of the generator (18), and means (25) for influencing the field current (I_{Err}) are provided which lower the field current (I_{Err}) before or when the limit temperature (T_{G}) is reached at a predeterminable point.

2. Device for regulating a generator (18) having a field winding (24) and a voltage regulator (26, 17) which, by influencing the field current of the generator, regulates the output voltage of the latter and has means (10) for temperature detection, the value of the resistance of the field winding (24) being less than a value which, even in the most unfavourable case, leads to no thermal overloading of the generator (18) or of the regulator (26, 17) and increases the field current (I_{Err}) temporarily with respect to the rated field current, and further means (25) are provided which lower the field current (I_{Err}) when a limit temperature (T_{G}) is reached at a predeterminable point.

3. Device according to Claim 2, characterized in that, in order to increase the power of the generator (18), a voltage is produced which is increased with respect to the output voltage of the generator (18) and can be supplied to the field winding (24).

4. Device according to Claim 1, 2 or 3, characterized in that the means which lower the field current contain a pulse-duration modulation stage (14) which has a comparator (15) and an oscillator (16) and influences the duty ratio of the regulator (17).

5. Device according to Claim 4, characterized in that a composite signal is formed from the temperature of the regulator, the rotational speed of the generator and the duty ratio of the regulator and is supplied to the pulse-duration modulation stage (14) as input signal.

6. Device according to Claim 5, characterized in that the pulse-duration modulation stage (14) supplies an output signal only when the composite signal exceeds a threshold value of the comparator (15).

7. Device according to Claim 2 or 3, characterized in that, in order to generate increased voltage with respect to the on-board supply voltage, the generator (16) is operated with freewheeling voltage.

8. Device according to Claim 2 or 3, characterized in that the voltage which is increased with respect to the on-board supply voltage is generated with the aid of a transformer (34) or of a suitable voltage converter.

9. Device according to one of the preceding claims, characterized in that the increased voltage can be applied to the field winding (24) only during a presettable time period.

10. Device according to one of the previous claims, characterized in that a display is produced if the limit temperature is reached and/or the field current I_{Err} is reduced.

11. Device according to one of the preceding claims, characterized in that the means for detecting temperature contain a computing device, preferably a microprocessor, in which the required index values are stored, to which the required measured variables are supplied and in which the required calculations run.

12. Device according to one of the preceding claims, characterized in that the means for influencing the field current I_{Err} uses index values of the generator, and/or index values of the voltage regulator and/or of the vehicle and/or installation-specific stored index values for calculating the temperature at predeterminable points of the device.

13. Device according to Claim 12, characterized in that signals continuously detected in the voltage regulator, preferably the temperature of the voltage regulator and rotational speed of the generator, are taken into consideration when calculating the temperature at pre-determinable points.

14. Device according to one of the preceding claims, characterized in that the limit temperature T_{G} is the temperature at which no malfunctions are yet to be expected, and different limit temperatures are defined for different points in the device.

15. Device according to one of the preceding Claims 11 to 14, characterized in that the means for detecting temperature measure the temperature of the voltage regulator and the temperature at another, choosable point in the system is computed on the basis of this in the computing device.

16. Device according to Claim 15, characterized in that an observer is used for detecting temperature.

## Revendications

1. Dispositif pour réguler un générateur (18) avec un enroulement d'excitation (24) et un régulateur de tension (26) qui régule la tension de sortie du générateur en influençant son courant d'excitation et comprend des moyens (10) pour détecter la température, le générateur étant conçu pour que sous une charge plus forte et/ou des températures extérieures plus élevées, notamment lorsque la vitesse de rotation du générateur est faible, il se produit sur le générateur du dispositif, automatiquement, une température limite (T_{G}), autorisée, pour augmenter la puissance du générateur (18) on applique à l'enroulement d'excitation (24) une tension supérieure à la tension de sortie du générateur (18) et des moyens (25) sont prévus pour influencer le courant d'excitation (I_{Err}) qui abaisse en un endroit prédéterminé, le courant d'excitation (I_{Err}) avant ou lorsqu'on atteint la température limite (T_{G}).

2. Dispositif de régulation d'un générateur (18) avec un enroulement d'excitation (24) et un régulateur de tension (26, 17) qui régule la tension de sortie du générateur en influençant le courant d'excitation du générateur et comporte des moyens pour détecter la température (10), la valeur de la résistance de l'enroulement d'excitation (24) étant inférieure à une valeur qui même dans le cas le plus défavorable n'aboutit à aucune surcharge thermique du générateur (18) ou du régulateur (26, 17) et augmente le courant d'excitation (I_{Err}) provisoirement par rapport à l'intensité nominale du courant d'excitation et d'autres moyens (25) sont prévus qui, lorsqu'on atteint une température limite (T_{G}), abaissent le courant d'excitation (I_{Err}) à un endroit prédéterminé.

3. Dispositif selon la revendication 2, caractérisé en ce que pour augmenter la puissance du générateur (18) on crée une tension plus élevée que la tension de sortie du générateur (18), tension qui peut être appliquée à l'enroulement d'excitation (24).

4. Dispositif selon la revendication 1, 2 ou 3, caractérisé en ce que les moyens qui abaissent le courant d'excitation comprennent un étage de modulation de durée d'impulsion (14) comprenant un comparateur (15) et un oscillateur (16) et influençant le rapport de travail du régulateur (17).

5. Dispositif selon la revendication 4, caractérisé en ce qu'à partir de la température du régulateur, de la vitesse de rotation du générateur et du rapport de travail du régulateur, on forme un signal de somme qui est appliqué comme signal d'entrée à un étage de modulation de la durée des impulsions (14).

6. Dispositif selon la revendication 5, caractérisé en ce que l'étage de modulation de la durée des impulsions (14) ne fournit un signal de sortie que si le signal de somme dépasse une valeur de seuil du comparateur (15).

7. Dispositif selon les revendications 2 ou 3, caractérisé en ce que pour créer une tension supérieure à celle du réseau embarqué, on fait fonctionner le générateur (16) avec une tension en roue libre.

8. Dispositif selon la revendication 2 ou 3, caractérisé en ce que la tension augmentée par rapport à la tension du réseau embarqué est créée à l'aide d'un transformateur (34) ou d'un convertisseur de tension, approprié.

9. Dispositif selon l'une des revendications précédentes, caractérisé en ce qu'on applique la tension augmentée que pendant une durée prédéterminée à l'enroulement d'excitation (24).

10. Dispositif selon une des revendications précédentes, caractérisé par un affichage lorsque l'on atteint la température limite et/ou le courant d'excitation (I_{Err}).

11. Dispositif selon l'une des revendications précédentes, caractérisé en ce que les moyens pour détecter la température comprennent une installation de calcul, de préférence un microprocesseur qui contient en mémoire les valeurs caractéristiques nécessaires et qui reçoit les grandeurs de mesure nécessaires et dans lequel se font les calculs appropriés.

12. Dispositif selon l'une des revendications précédentes, caractérisé en ce que les moyens pour influencer le courant d'excitation (I_{Err}) sont les caractéristiques du générateur et/ou les caractéristiques du régulateur de tension et/ou du véhicule et/ou des valeurs caractéristiques enregistrées, spécifiques au montage, pour calculer la température en des endroits prédéterminés du dispositif.

13. Dispositif selon la revendication 12, caractérisé en ce que le régulateur de tension tient compte de signaux déterminés en continu, de préférence la température du régulateur de tension et la vitesse de rotation du générateur pour le calcul de la température en des endroits prédéterminés.

14. Dispositif selon l'une des revendications précédentes, caractérisé en ce que la température limite (T_{G}) est la température à laquelle aucune fonction défectueuse n'est prévisible et pour laquelle, en des endroits différents du dispositif, on a constaté différentes températures limites.

15. Dispositif selon l'une des revendications précédentes 11 à 14, caractérisé en ce que les moyens de détection de la température mesurent la température du régulateur de tension et l'installation de calcul calcule la température en d'autres points, choisis du système.

16. Dispositif selon la revendication 15, caractérisé en ce que l'on utilise un observateur pour détecter la température.
